# EUROPÄISCHE PATENTANMELDUNG

(11) **EP 2 189 495 A1**
(43) Veröffentlichungstag der Anmeldung: **26.05.2010**
(21) Anmeldenummer: 08162772.1
(22) Anmeldetag: 21.08.2008
(51) Int. Cl.: C08K 3/22, C08L 23/08, H01B 7/295

(54) **Hochflexible, halogenfreie und flammgeschützte thermoplastische Kabelmischungen**

(71) Anmelder: LANXESS Deutschland GmbH, 51369 Leverkusen (DE)
(72) Erfinder: Die Erfindernennung liegt noch nicht vor

(57) **Zusammenfassung**

Zusammensetzungen enthaltend mindestens ein thermoplastisches Polymer als Komponente A, mindestens ein C₂-C₄-α-Olefinvinylacetat-Copolymer mit einem Vinylacetat-Gehalt von > 40 Gew.-% als Komponente B, mindestens ein durch Metallocen-Katalyse hergestelltes Plastomer, basierend auf Ethylen und mindestens einem C₄-C₈-Olefin als Komponente C, wobei die Komponente C von der Komponente A verschieden ist, mindestens ein Polyolefinhomo- oder - copolymer, das mit einer ungesättigten Carbonsäure oder einem Derivat davon modifiziert ist, als Komponente D, mindestens ein Flammschutzmittel als Komponente E sowie gegebenenfalls einen oder mehrere weitere Hilfs- und Zusatzstoffe, ein Verfahren zur Herstellung der erfindungsgemäßen Zusammensetzungen, die Verwendung der erfindungsgemäßen Zusammensetzungen als Isolier- oder Mantelwerkstoffe für Kabel oder Leitungen, Isolier- oder Mantelwerkstoffe für Kabel oder Leitungen, enthaltend die erfindungsgemäße Zusammensetzung sowie Kabel oder Leitungen, die die erfindungsgemäße Zusammensetzung enthalten.

## Beschreibung

Die vorliegende Erfindung betrifft Zusammensetzungen enthaltend mindestens ein thermoplastisches Polymer als Komponente A, mindestens ein C₂-C₄-α-Olefinvinylacetat-Copolymer mit einem Vinylacetat-Gehalt von > 40 Gew.-% als Komponente B, mindestens ein durch Metallocen-Katalyse hergestelltes Plastomer, basierend auf Ethylen und mindestens einem C₄-C₈-Olefin als Komponente C, wobei die Komponente C von der Komponente A verschieden ist, mindestens ein Polyolefinhomo- oder -copolymer, das mit einer ungesättigten Carbonsäure oder einem Derivat davon modifiziert ist, als Komponente D, mindestens ein Flammschutzmittel als Komponente E sowie gegebenenfalls einen oder mehrere weitere Hilfs- und Zusatzstoffe, ein Verfahren zur Herstellung der erfindungsgemäßen Zusammensetzungen, die Verwendung der erfindungsgemäßen Zusammensetzungen als Isolier- oder Mantelwerkstoffe für Kabel oder Leitungen, Isolier- oder Mantelwerkstoffe für Kabel oder Leitungen, enthaltend die erfindungsgemäße Zusammensetzung sowie Kabel oder Leitungen, die die erfindungsgemäße Zusammensetzung enthalten.

Kabel und Leitungen werden in einer Vielzahl von Anwendungen eingesetzt, z. B. im Bereich der Telekommunikation, im Bereich der Automobilindustrie, in Industrie und Haushalt, in der Schifffahrt, bei der Bahn, im militärischen Bereich und im Bereich der Offshore-Exploration. Die geforderten Gebrauchseigenschaften der Kabel und Leitungen sind wesentlich für die Auswahl der Werkstoffe für Isolierungen und weitere schützende Hüllen, z. B. Mäntel. Insbesondere sind Kriterien wie ausreichende Betriebssicherheit und Betriebslebensdauer, Umweltverträglichkeit und Kosten für die Auswahl geeigneter Isolier- und Mantelwerkstoffe wesentlich.

Bezüglich der Betriebssicherheit sind neben der richtigen Auswahl des Leiters u. a. die elektrischen Eigenschaften der Isolierung wesentlich.

Unter dem Gesichtspunkt der Betriebslebensdauer (Lebensdauer im Gebrauch) spielen bei der Auswahl der Isolier- und Mantelwerkstoffe z. B. die Berücksichtigung der Einsatztemperaturen und weitere Einsatzbedingungen wie mechanische Belastung durch Biegung (u. a. Biegung bei niedrigen Temperaturen), das Wärmedehnverhalten (ermittelt mittels des Hotset-Tests), chemische Einflüsse durch organische Kohlenwasserstoffe wie Fette und Öle (z. B. bei der Verdrahtung verschiedener Autoteile, bzw. der elektrischen Ausrüstung von Autos) und UV-Strahlung, sowie die Alterungsbeständigkeit eine Rolle.

Bezüglich der Umweltverträglichkeit werden vor allem Forderungen zur Recyclierbarkeit, zur Halogenfreiheit und zum Verhalten im Brandfall gestellt.

Für die kostenorientierte Auswahl geeigneter Werkstoffe sind neben den Beschaffungskosten und dem spezifischen Materialverbrauch die Verarbeitungskosten und die Investitionskosten zu berücksichtigen.

Die größte Bedeutung als Isolier- und Mantelwerkstoff in der Kabelindustrie hat Polyvinylchlorid (PVC). Das PVC kann durch den Einsatz von Weichmachern, Stabilisatoren, Füllstoffen und Gleitmitteln für ein breites Anwendungsspektrum modifiziert werden. Neben einem hohen dielektrischen Verlustfaktor ist jedoch das Verhalten von PVC im Brandfall nachteilig. PVC gilt zwar als schwer entflammbar, im Brandfall sind jedoch die starke Rauchentwicklung sowie die durch Abspaltung von Chlor entstehenden korrosiven Gase problematisch.

Neben PVC haben daher halogenfreie thermoplastische Materialien wie Polyethylen, Ethylen-Vinylacetat-Copolymere (EVA) sowie die entsprechenden vernetzten Polymere eine wesentliche Bedeutung als Isolier- und Mantelwerkstoffe in der Kabelindustrie erlangt. Die halogenfreien thermoplastischen Materialien wie Polyethylen (PE) oder Ethylen-Vinylacetat-Copolymere (EVA) weisen jedoch im Allgemeinen selbst keine gute Flammbeständigkeit auf. Daher ist es erforderlich, diese halogenfreien thermoplastischen Materialien für den Einsatz als Isolier- oder Mantelwerkstoffe für Kabel oder Leitungen mit Flammschutzmitteln auszurüsten. Üblicherweise eingesetzte Flammschutzmittel sind halogenfreie Flammschutzmittel wie Aluminiumhydroxid (ATH (ebenfalls als Aluminiumoxidtrihydrat bezeichnet)) oder Magnesiumhydroxid (MDH). Diese halogenfreien Flammschutzmittel werden den thermoplastischen Materialien im Allgemeinen in großen Mengen zugegeben, um ihre Wirksamkeit zu entfalten. Da diese Flammschutzmittel mit den üblicherweise eingesetzten halogenfreien im Wesentlichen unpolaren thermoplastischen Materialien nicht oder schlecht verträglich sind, weisen Zusammensetzungen auf Basis von thermoplastischen Materialien wie Polyethylen (PE) und/oder Ethylen-Vinylacetat-Copolymeren (EVA), die mit diesen Flammschutzmitteln ausgerüstet sind, üblicherweise eine geringe Festigkeit und Flexibilität, schlechte Verarbeitungseigenschaften, z. B. schlechte Misch- und Extrudierbarkeit, sowie eine verbesserungswürdige Flammbeständigkeit auf.

Im Stand der Technik sind zahlreiche Versuche bekannt, um die vorstehend genannten Nachteile bei Einsatz von halogenfreien Flammschutzmitteln wie Aluminiumhydroxid oder Magnesiumhydroxid, die in großen Mengen eingesetzt werden, zu vermeiden.

So betrifft WO 2006/068309 eine flammhemmende Harzzusammensetzung, die ohne dass sie einer Vernetzungsbehandlung unterzogen wird, für den Einsatz in geformten Artikeln, insbesondere als Beschichtungsmaterial für Drahtmaterialien, geeignet ist. Diese Zusammensetzung umfasst einen Harzbestandteil (A), der 0 bis 90 Gew.-% eines Copolymers aus Ethylen und Vinylacetat (a-1) und/oder eines Copolymers aus Ethylen und (Meth)acrylsäureester (a-2); 3 bis 45 Gew.-% eines Polyolefins, das mit einer ungesättigten Carbonsäure oder einem Derivat derselben modifiziert ist (b-1) und/oder eines Copolymers aus Ethylen und (Meth)acrylsäure (b-2), 5 bis 50 Gew.-% eines Acrylgummis, der (Meth)acrylsäure als einen Copolymer-Bestandteil enthält (c), und 0 bis 45 % eines Polypropylens (d). Des Weiteren enthält die Zusammensetzung 100 bis 300 Gewichtsteile Magnesiumhydroxid, bezogen auf 100 Gewichtsteile des Harz-Bestandteils (A). Die flammhemmende Zusammensetzung soll eine ausgezeichnete Flammhemmung, ausgezeichnete mechanische Eigenschaften, eine ausgezeichnete Flexibilität, eine ausgezeichnete Abriebfestigkeit und eine ausgezeichnete Wärmebeständigkeit aufweisen. Gemäß WO 2006/068309 ist es zur Erzielung der vorteilhaften Eigenschaften wesentlich, dass die wesentlichen Bestandteile der Zusammensetzungen gemäß WO 2006/068309, nämlich der Bestandteil (b-1) und/oder (b-2) oder der Bestandteil (c) in den beanspruchten Mengenbereichen liegen.

In EP-A 0 333 514 sind feuerhemmende (flammwidrige) Zusammensetzungen offenbart, die umfassen: a) 5 bis 60 Gew.-% eines Olefincopolymers oder -terpolymers mit einem niedrigen Modul, in dem 3 bis 20 Gew.-% des Copolymers oder Terpolymers aus einem Carbonsäure-Comonomer bestehen; b) 1 bis 15 Gew.-% eines Organopolysiloxans; und c) 20 bis 85 Gew.-% eines flammwidrig machenden Additivs, das ein Metalloxidhydrat eines Metalls der Gruppe I, II oder III des PSE umfasst. Gemäß EP-A 0 333 514 werden aufgrund der Verwendung von Polymeren und Elastomeren mit einem niedrigen Modul Zusammensetzungen mit gegenüber dem Stand der Technik verbesserter Zug- und Biegefestigkeit erhalten, so dass das fertige Produkt für die Vakuumverformung geeignet ist.

K. Naskar et al., Journal of Applied Polymer Science, Vol. 104, 2839-2848 (2007) betrifft die Entwicklung von dünnwandigen halogenfreien Kabelisolierungen und halogenfreien flammhemmenden, wenig rauchenden Kabelummantelungen, basierend auf Polyolefin-Elastomeren und Ethylenvinylacetat-Mischungen. Die gemäß Naskar et al. eingesetzten Mischungen enthalten z. B. (Mischung SH-11) ein Polyolefin-Elastomer, wobei es sich um ein Copolymer aus Ethylen und n-Octen handelt, ein Ethylen-Vinylacetat-Copolymer, das einen Vinylacetat-Gehalt von 28 Gew.-% aufweist, ein Ethylen-Vinylacetat-Copolymer, das einen Vinylacetat-Gehalt von 45 Gew.-% aufweist sowie Aluminiumtrihydroxid (ATH) als Flammschutzmittel und zusätzlich eine Kombination aus Dicumylperoxid und Trialylcyanurat als Vernetzer und Vinylsilan als Funktionalisierungsreagens.

A. A. Basfar et al., Journal of Applied Polymer Science, Vol. 107, 642-649 (2008) betrifft mechanische und thermische Eigenschaften von Mischungen aus LDPE und Ethylenvinylacetat, die sowohl durch Dicumylperoxid als auch durch ionische Bestrahlung vernetzt sind, zur Anwendung als Isoliermaterial für Kabel und Drähte.

Bei den Zusammensetzungen handelt es sich um vernetzte Zusammensetzungen, die neben LDPE und Ethylen-Vinylacetat-Copolymeren Coadditive enthalten, u. a. mit Maleinsäureanhydrid gepfropftes Polyethylen und Vinylsilan und die des Weiteren Ammoniumpolyphosphate als Flammschutzmittel enthalten.

Aus dem vorstehend genannten Stand der Technik geht hervor, dass zur Herstellung von Zusammensetzungen, die als Isolier- oder Mantelwerkstoffe für Kabel oder Leitungen geeignet sind, eine Kompatibilität aller Additive, insbesondere der in großen Mengen eingesetzten polaren Flammschutzmittel, mit den eingesetzten Polymeren erforderlich ist, um Zusammensetzungen mit einem ausgewogenen Eigenschaftsprofil zu erhalten. Das Eigenschaftsprofil der im Stand der Technik genannten Zusammensetzungen ist weiter verbesserungswürdig, insbesondere im Hinblick auf die mechanischen Eigenschaften bei hohen Füllstoffgehalten wie Zugfestigkeit (tensile strength) und Bruchdehnung (elongation at break) sowohl bei Raumtemperatur als auch bei tiefen Temperaturen unterhalb von Raumtemperatur, sowie nach Alterung und Härte (Shore A und Shore D), hinsichtlich der Viskosität sowie hinsichtlich der Flammbeständigkeit. Des Weiteren ist es - insbesondere für die Anwendung als Isolier- bzw. Mantelwerkstoffe für Kabel, die im Automobilbereich sowie im Schiffbau und in der Offshore Exploration eingesetzt werden - wesentlich, dass Zusammensetzungen bereitgestellt werden, die neben einer hohen Flexibilität eine sehr gute Beständigkeit gegen organische Kohlenwasserstoffe, insbesondere gegenüber Öl, aufweisen.

Somit ist es die Aufgabe der vorliegenden Erfindung, Zusammensetzungen bereitzustellen, die ohne Vernetzung als Isolier- und Mantelwerkstoffe für Kabel oder Leitungen eingesetzt werden können und eine hohe Flexibilität, gute Flammbeständigkeit und hervorragende Beständigkeit gegen organische Kohlenwasserstoffe sowie eine gute Verarbeitbarkeit aufweisen.

Diese Aufgabe wird gelöst durch Zusammensetzungen enthaltend
a) mindestens ein thermoplastisches Polymer als Komponente A, bevorzugt mindestens ein Polyolefinhomo- oder -copolymer, besonders bevorzugt ausgewählt aus Homopolymeren, basierend auf C₂-C₄-α-Olefinen und Copolymeren, basierend auf C₂-C₄-α-Olefinen und weiteren, von den erstgenannten C₂-C₄-α-Olefinen verschiedenen C₂-C₄-α-Olefinen, C₁-C₄-Alkylacrylaten, C₁-C₄-Alkylmethacrylaten, Acrylsäure, Methacrylsäure, Vinylacetat, wobei der Vinylacetat-Gehalt in den Copolymeren ≤ 40 Gew.-% beträgt, und Gemischen davon, besonders bevorzugt C₂-C₄-α-Olefin-Vinylacetat-Copolymere mit einem Vinylacetat-Gehalt von ≤ 40 Gew.-% oder Mischungen enthaltend Polyethylen, bevorzugt LLDPE, und ein C₂-C₄-α-Olefin-Vinylacetat-Copolymer mit einem Vinylacetat-Gehalt von ≤ 0 Gew.-%, wobei es sich bei dem eingesetzten C₂-C₄-α-Olefin-Vinylacetat-Copolymer mit einem Vinylacetat-Gehalt von ≤ 40 Gew.-% bevorzugt um Ethylen-Vinylacetat-Copolymer mit einem Vinylacetat-Gehalt von ≤ 40 Gew.-% handelt;
b) mindestens ein C₂-C₄-α-Olefin-Vinylacetat-Copolymer mit einem Vinylacetat-Gehalt von > 40 Gew.-%, bevorzugt 45 bis 98 Gew.-%, besonders bevorzugt entweder (i) mit einem Vinylacetat-Gehalt von 40 bis 60 Gew.-%, bevorzugt 40 bis 50 Gew.-% oder (ii) mit einem Vinylacetat-Gehalt von 50 bis 90 Gew.-%, besonders 70 bis 85 Gew.-%, als Komponente B, wobei es sich bei dem C₂-C₄-α-Olefin-Vinylacetat-Copolymer bevorzugt um Ethylen-Vinylacetat-Copolymer handelt;
c) mindestens ein durch Metallocen-Katalyse hergestelltes Plastomer, basierend auf Ethylen und mindestens einem C₄-C₈-Olefin als Komponente C, wobei die Komponente C von der Komponente A verschieden ist, besonders bevorzugt basierend auf Ethylen und Octen, Ethylen und Hexen oder Ethylen und Buten, ganz besonders bevorzugt basierend auf Ethylen und 1-Octen;
d) mindestens ein Polyolefinhomo- oder -copolymer, das mit einer ungesättigten Carbonsäure oder einem Derivat davon modifiziert ist, bevorzugt ausgewählt aus mit carboxylgruppenhaltigen Verbindungen gepfropftem Polyethylen und mit carboxylgruppenhaltigen Verbindungen gepfropften C₂-C₄-α-Olefin-Vinylacetat-Copolymeren, wobei es sich besonders bevorzugt um Ethylen-Vinylacetat-Copolymere handelt, besonders bevorzugt mit Maleinsäureanhydrid gepfropftes LLDPE (MA.g. LLDPE) oder mit Maleinsäureanhydrid gepfropftes C₂-C₄-α-Olefin-Vinylacetat-Copolymer, bevorzugt mit einem Vinylacetat-Gehalt von > 40 Gew.-%, besonders bevorzugt 45 bis 98 Gew.-%, besonders bevorzugt 45 bis 80 Gew.-%, wobei es sich bei dem C₂-C₄-α-Olefin-Vinylacetat-Copolymeren bevorzugt um Ethylen-Vinylacetat-Copolymer handelt (MA.g.EVM), als Komponente E;
e) mindestens ein Flammschutzmittel als Komponente E, bevorzugt mindestens ein anorganisches Flammschutzmittel, besonders bevorzugt Aluminiumhydroxid (ATH), Magnesiumhydroxid (MDH), Magnesiumcarbonat und/oder Natriumaluminiumhydroxycarbonat und Hydrotalcit, ganz besonders bevorzugt Aluminiumhydroxid (ATH) und/oder Magnesiumhydroxid (MDH); und
f) gegebenenfalls ein oder mehrere weitere Hilfs- und/oder Zusatzstoffe als Komponente F.

Die erfindungsgemäßen Zusammensetzungen zeichnen sich durch ein ausgewogenes Eigenschaftsprofil insbesondere in Anwesenheit von großen Mengen Flammschutzmittel auf, d. h., sie weisen eine gute Flexibilität auf, die sich in guten Werten für die Zugfestigkeit (tensile strength) und Bruchdehnung (elongation at break) sowohl bei Raumtemperatur als auch bei niedrigen Temperaturen zeigt, gute Flammschutzeigenschaften, z.B. geringe Rauchgasdichte, geringe heat release rate, geringe mass loss rate, geringes CO/CO₂-Verhältnis, hohe liminting oxygen indices (LOI), gute Verarbeitungseigenschaften, z.B. einen hohen Schmelzflussindex (MFI) und eine geringe Härte, gute Beständigkeit gegenüber organischen Kohlenwasserstoffen, insbesondere eine gute Ölbeständigkeit, sowie gute Alterungseigenschaften, z.B. geringe Eigenschaftsänderungen nach Heißluftalterung, aus. Dabei ist die spezielle Kombination der Komponenten A, B, C und D mit dem Flammschutzmittel E wesentlich, wobei die Komponente B als Kompatibilisator zwischen dem thermoplastischen Polymer A und dem Flammschutzmittel E in Zusammenspiel mit den Komponenten C und D wirkt. Durch den Einsatz der Komponente B in den erfindungsgemäßen Zusammensetzungen gemeinsam mit den Komponenten A, C bis E und gegebenenfalls F können die Flexibilität, die Kompatibilität der eingesetzten Komponenten, die Flammschutzeigenschaften sowie die Beständigkeit gegenüber organischen Kohlenwasserstoffen der Zusammensetzungen verbessert werden.

Unter C₂-C₄-α-Olefinen gemäß der vorliegenden Anmeldung sind alle dem Fachmann bekannten C₂-C₄-α-Olefine zu verstehen. Bevorzugt sind die C₂-C₄-α-Olefine ausgewählt aus der Gruppe bestehend aus Ethylen, Propylen, Butylen, insbesondere n-Butylen und i-Butylen. Bevorzugte C₂-C₄-α-Olefine sind Ethylen und Propylen, wobei Ethylen ganz besonders bevorzugt als C₂-C₄-α-Olefin eingesetzt wird.

Die Angabe "halogenfrei" bedeutet im Sinne der vorliegenden Anmeldung, dass weder in der erfindungsgemäßen Zusammensetzung noch in den einzelnen Komponenten der erfindungsgemäßen Zusammensetzung über Verunreinigungen hinausgehende Mengen an Halogen vorliegen. Der Halogengehalt der erfindungsgemäßen Zusammensetzungen bzw. der Halogengehalt der Komponenten A bis E und ggf. F beträgt daher im Allgemeinen 0 bis 5 Gew.-%, bevorzugt 0 bis 3 Gew.-%, besonders bevorzugt 0 bis 1 Gew.-%, bezogen auf das Gesamtgewicht der Zusammensetzung bzw. bezogen auf die jeweilige Komponente.

### Komponente A mindestens ein thermoplastisches Polymer

Als Komponente A wird ein thermoplastisches halogenfreies Polymer eingesetzt. Dabei handelt es sich bevorzugt um ein Polyolefinhomo- oder -copolymer. Geeignete Polyolefinhomo- oder - copolymere sind besonders bevorzugt ausgewählt aus Homopolymeren basierend auf C₂-C₄-α-Olefinen und Copolymeren basierend auf C₂-C₄-α-Olefinen und weiteren von den erstgenannten C₂-C₄-α-Olefinen verschiedenen C₂-C₄-α-Olefinen, C₁-C₄-Alkylacrylaten, C₁-C₄-Alkylmethacrylaten, Acrylsäure, Methacrylsäure, Vinylacetat, wobei der Vinylacetat-Gehalt in den Copolymeren ≤ 0 Gew.-% beträgt, und Gemischen davon. Unter Gemischen davon ist zu verstehen, dass unter den Copolymeren basierend auf C₂-C₄-α-Olefinen und den vorstehend genannten Comonomeren auch solche Copolymere zu verstehen sind, die neben den als C₂-C₄-α-Olefinen eingesetzten Monomer-Komponenten eine, zwei oder mehr weitere verschiedene Monomer-Komponenten aufweisen können.

Besonders bevorzugte Komponenten A sind Polyethylen (PE), z. B. Polyethylen niedriger Dichte (LDPE), lineares Polyethylen niedriger Dichte (LLDPE), Polyethylen sehr niedriger Dichte (VLDPE), Polyethylen mittlerer Dichte (MDPE) und Polyethylen hoher Dichte (HDPE), Polypropylen (PP), C₂-C₄-α-Olefin-Vinylacetat-Copolymer mit einem Vinylacetat-Gehalt von ≤ 40 Gew.-%, z. B. Ethylen-Vinylacetat-Copolymer mit einem Vinylacetat-Gehalt von ≤ 40 Gew.-% (EVA), Ethylen-Ethyl-Acrylat-Copolymer (EEA), Ethylen-Butyl-Acrylat-Copolymer (EDA), Ethylen-Propylen-Gummi (EPR), Ethylen(meth)acrylat-Copolymere und Mischungen der genannten Polymere. Insbesondere bevorzugt werden als Komponente A C₂-C₄-α-Olefin-Vinylacetat-Copolymere mit einem Vinylacetat-Gehalt von ≤ 40 Gew.-%, z. B. Ethylen-Vinylacetat-Copolymere mit einem Vinylacetat-Gehalt von ≤ 40 Gew.-%, oder Mischungen enthaltend Polyethylen, z. B. LLDPE, und C₂-C₄-α-Olefin-Vinylacetat-Copolymere mit einem Vinylacetat-Gehalt von ≤ 40 Gew.-%, z. B. Ethylen-Vinylacetat-Copolymere mit einem Vinylacetat-Gehalt von ≤ 40 Gew.-%, eingesetzt. Wenn Mischungen enthaltend Polyethylen und C₂-C₄-α-Olefin-Vinylacetat-Copolymere eingesetzt werden, beträgt der Gehalt an Polyethylen im Allgemeinen 10 bis 90 Gew.-%, bevorzugt 20 bis 80 Gew.-% und der Gehalt an C₂-C₄-α-Olefin-Vinylacetat-Copolymeren mit einem Vinylacetat-Gehalt von ≤ 40 Gew.-% im Allgemeinen 10 bis 90 Gew.-%, bevorzugt 20 bis 80 Gew.-%, wobei die Summe aus Polyethylen und C₂-C₄-α-Olefin-Vinylacetat-Copolymeren 100 Gew.-% ergibt.

Die als Komponente A eingesetzten thermoplastischen Polymere sind dem Fachmann bekannt und können gemäß beliebigen dem Fachmann bekannten Verfahren hergestellt werden, bzw. sind kommerziell erhältlich.

In einer ganz besonders bevorzugten Ausführungsform ist die Komponente A ausgewählt aus Ethylen-Vinylacetat-Copolymeren mit einem Vinylacetat-Gehalt von ≤ 40 Gew.-%, bevorzugt 15 bis ≤ 40 Gew.-%, besonders bevorzugt 20 bis 35 Gew.-%, ganz besonders bevorzugt 20 bis 30 Gew.-% und einer Mischung enthaltend LLDPE und Ethylen-Vinylacetat-Copolymer mit einem Vinylacetat-Gehalt von ≤ 40 Gew.-%, bevorzugt 15 bis ≤ 40 Gew.-%, besonders bevorzugt 20 bis 35 Gew.-%, ganz besonders bevorzugt 20 bis 30 Gew.-%, wobei die Summe aus Ethylen und Vinylacetat in dem Ethylen-Vinylacetat-Copolymeren 100 Gew.-% beträgt..

### Komponente B

Bei der Komponente B handelt es sich um mindestens ein C₂-C₄-α-Olefin-Vinylacetat-Copolymer mit einem Vinylacetat-Gehalt von > 40 Gew.-%. Die Komponente B ist in den erfindungsgemäßen Zusammensetzungen wesentlich, da sie als Kompatibilisator zwischen der im Wesentlichen unpolaren Komponente A und dem üblicherweise polaren Flammschutzmittel (Komponente E) wirkt. Die als Komponente B eingesetzten C₂-C₄-α-Olefin-Vinylacetat-Copolymere weisen bevorzugt einen Vinylacetat-Gehalt von 45 bis 98 Gew.-%, besonders bevorzugt entweder (i) 40 bis 60 Gew.-%, bevorzugt 40 bis 50 Gew.-% oder (ii) 50 bis 90 Gew.-%, besonders 70 bis 85 Gew.-% auf. Dabei bezieht sich die Angabe des Vinylacetat-Gehalts in der vorliegenden Anmeldung immer auf die Gesamtmenge aus Ethylen-Einheiten und Vinylacetat-Einheiten in dem Ethylen-Vinylacetat-Copolymer, die 100 Gew.-% beträgt. Das bedeutet, dass der Ethylen-Gehalt in der Komponente B ≤ 0 Gew.-%, bevorzugt 2 bis 55 Gew.-%, besonders bevorzugt entweder (i) 40 bis 60 Gew.-%, bevorzugt 50 bis 60 Gew.-% oder (ii) 10 bis 50 Gew.-%, besonders 15 bis 30 Gew.-% beträgt.

Die als Komponente B eingesetzten C₂-C₄-α-Olefin-Vinylacetat-Copolymere können neben den auf dem C₂-C₄-α-Olefin und Vinylacetat basierenden Monomereinheiten eine oder mehrere weitere Comonomer-Einheiten aufweisen (z. B. Terpolymere), z. B. basierend auf Vinylestern und/oder (Meth)acrylaten. Die weiteren Comonomer-Einheiten sind - wenn überhaupt weitere Comonomer-Einheiten in der Komponente E vorliegen - in einem Anteil von bis zu 10 Gew.-%, bezogen auf das Gesamtgewicht des C₂-C₄-α-Olefin-Vinylacetat-Copolymeren vorhanden, wobei sich der Anteil der auf dem C₂-C₄-α-Olefin basierenden Monomereinheiten entsprechend verringert. In einer bevorzugten Ausführungsform werden als Komponente B C₂-C₄-Olefin-Vinylacetat-Copolymere eingesetzt, die keine weiteren Monomereinheiten aufweisen. Ganz besonders bevorzugt handelt es sich bei den C₂-C₄-α-Olefin-Vinylacetat-Copolymeren um Ethylen-Vinylacetat-Copolymere.

Die als Komponente B eingesetzten C₂-C₄-α-Olefin-Vinylacetat-Copolymere mit einem Vinylacetat-Gehalt von > 40 Gew.-% können z. B. nach einem Lösungspolymerisations-Verfahren bei einem Druck von 100 bis 700 bar, bevorzugt bei einem Druck von 100 bis 400 bar, hergestellt werden. Das Lösungspolymerisations-Verfahren wird bevorzugt bei Temperaturen von 50 bis 150°C durchgeführt, wobei im Allgemeinen radikalische Initiatoren verwendet werden. Geeignete Herstellungsverfahren für die vorstehend genannten durch Lösungspolymerisations-Verfahren hergestellten C₂-C₄-α-Olefin-Vinylacetat-Copolymere sind z. B. in EP-A 0 341 499, EP-A 0 510 478 und DE-A 38 25 450 genannt. Die gemäß dem vorstehend erwähnten Lösungspolymerisations-Verfahren hergestellten C₂-C₄-α-Olefin-Vinylacetat-Copolymere zeichnen sich insbesondere durch niedrige Verzweigungsgrade und damit niedrige Viskositäten aus. Des Weiteren weisen diese C₂-C₄-α-Olefin-Vinylacetat-Copolymere eine statistisch gleichmäßigere Verteilung ihrer Bausteine (C₂-C₄-α-Olefin und Vinylacetat) auf als nach anderen Verfahren hergestellte C₂-C₄-α-Olefin-Vinylacetat-Copolymere.

Die besonders bevorzugt als Komponente B eingesetzten Ethylen-Vinylacetat-Copolymere mit einem Vinylacetat-Gehalt von > 40 Gew.-% werden üblicherweise als EVM-Copolymere bezeichnet, wobei das "M" in der Bezeichnung das gesättigte Rückgrad der Methylenhauptkette des EVMs andeutet.

Die bevorzugt als Komponente B eingesetzten Ethylen-Vinylacetat-Copolymere weisen im Allgemeinen MFI-Werte (g/10 min.), gemessen nach ISO bei 133 bis 190°C und einer Last von 21,1 N, von 1 bis 40, bevorzugt 1 bis 10, besonders bevorzugt 2 bis 6 auf. Die Mooney-Viskositäten der genannten C₂-C₄-α-Olefin-Vinylacetat-Copolymere gemäß DIN 53 523 ML 1+4 bei 100°C betragen im Allgemeinen 3 bis 50, bevorzugt 4 bis 35 Mooney-Einheiten. Zum Beispiel können als Komponente B Ethylen-Vinylacetat-Copolymere mit einem Vinylacetat-Gehalt von 75 bis 98 Gew.-%, einem Gelgehalt von < 0,5 Gew.-% und einem gewichtsmittleren Molekulargewicht von > 150000 eingesetzt werden, wie sie beispielsweise in DE-A 37 31 054 beschrieben sind.

Als Komponente B geeignete Ethylen-Vinylacetat-Copolymere sind z. B. unter den Handelsnamen Levapren^{®} oder Levamelt^{®} der Lanxess Deutschland GmbH kommerziell erhältlich. Dabei handelt es sich bevorzugt um Ethylen-Vinylacetat-Copolymere wie Levapren^{®}450, Levapren^{®}452, Levapren^{®}456, Levapren^{®}500, Levapre^{®}600, Levapre^{®}700, Levapre^{®}800 und Levapre^{®}900, bzw. die entsprechenden Levamelt^{®}-Typen.

### Komponente C

Als Komponente C wird mindestens ein durch Metallocen-Katalyse hergestelltes Plastomer basierend auf Ethylen und mindestens einem C₄-C₈-Olefin eingesetzt, wobei die Komponente C von der Komponente A verschieden ist. Neben der Komponente B stellt auch die Komponente C eine wesentliche Komponente der erfindungsgemäßen Zusammensetzungen dar, die zu einer verbesserten Verarbeitbarkeit und zu einem ausgewogenen Eigenschaftsprofil der erfindungsgemäßen Zusammensetzungen beiträgt. Die als Komponente C eingesetzten Plastomere sind statistische Ethylen-Copolymere. Die Steuerung des Gehalts an C₄-C₈-Olefin in den statistischen Ethylen-Copolymeren wird durch die gezielte Anordnung der Comonomere in der Polymerkette mittels Katalysatoren mit einheitlichen aktiven Zentren auf Grundlage von Metallocen-Katalysator-Systemen erreicht (siehe z. B. EP 0 416 815, US 5,703,187 und US 5,872,201). Der Gehalt an C₄-C₈-Olefinen als Comonomere in den Ethylen-Copolymeren beträgt im Allgemeinen 5 bis 50 Gew.-%, bevorzugt 10 bis 35 Gew.-%.

Geeignete C₄-C₈-Olefine, die als Monomere zur Herstellung der als Komponente C eingesetzten Ethylen-Copolymere dienen, sind bevorzugt ausgewählt aus Octen, Hexen und Buten, wobei 1-Octen besonders bevorzugt ist. Ganz besonders bevorzugt handelt es sich bei der Komponente C somit um ein durch Metallocen-Katalyse hergestelltes Plastomer auf Basis von Ethylen und 1-Octen, wobei der Gehalt an 1-Octen-Einheiten in dem Copolymer im Allgemeinen 5 bis 50 Gew.-%, bevorzugt 10 bis 35 Gew.-%, bezogen auf die Summe aus Ethylen- und 1-Octen-Einheiten in dem Copolymer, die 100 Gew.-% beträgt, beträgt. Die Komponente C kann gemäß dem Fachmann bekannten Verfahren hergestellt werden (siehe EP 0 416 815, US 5,703,187 und US 5,872,201), bzw. ist kommerziell erhältlich, z. B. unter dem Handelsnamen Exact^{®}0210 von DSM/Exxon Mobil Chemical Joint Venture.

### Komponente D

Bei der Komponente D handelt es sich um mindestens ein Polyolefinhomo- oder -copolymer, das mit einer ungesättigten Carbonsäure oder einem Derivat davon modifiziert ist. Auch die Komponente D ist in den erfindungsgemäßen Zusammensetzungen wesentlich, da auch diese Komponente zur Verbesserung der Kompatibilität zwischen dem im Wesentlichen unpolaren thermoplastischen Polymer (Komponente A) und dem im Allgemeinen polaren Flammschutzmittel (Komponente E) beiträgt.

Geeignete Polyolefinhomo- oder -copolymere, die zur Bereitstellung der Komponente D mit einer ungesättigten Carbonsäure oder einem Derivat davon modifiziert werden, sind die als Komponente A genannten Homo- oder Copolymere. Zusätzlich zu den als Komponente A genannten Homo-oder Copolymeren können auch C₂-C₄-α-Olefin-Vinylacetat-Copolymere eingesetzt werden, die einen Gehalt von > 40 Gew.-% aufweisen, wie sie als Komponente B gemäß der vorliegenden Anmeldung eingesetzt werden.

Unter einem Polyolefinhomo- oder -copolymer, das mit einer ungesättigten Carbonsäure oder einem Derivat davon modifiziert ist, soll insbesondere das entsprechende Polyolefinhomo- oder - Copolymer verstanden werden, auf das die ungesättigte Carbonsäure oder das Derivat davon aufgepfropft ist.

Besonders bevorzugt handelt es sich bei dem Polyolefinhomo- oder -copolymer um Polyethylen, bevorzugt LLDPE oder um C₂-C₄-α-Olefin-Vinylacetat-Copolymer, bevorzugt mit einem Vinylacetat-Gehalt von > 40 Gew.-%, besonders bevorzugt 45 bis 98 Gew.-%, ganz besonders bevorzugt 45 bis 80 Gew.-%, bevorzugt um Ethylen-Vinylacetat-Copolymer bevorzugt mit einem Vinylacetat-Gehalt von > 40 Gew.-%, besonders bevorzugt 45 bis 98 Gew.-%, ganz besonders bevorzugt 45 bis 80 Gew.-%.

Beispiele für geeignete ungesättigte Carbonsäuren sind Acrylsäure, Methacrylsäure, Maleinsäure, Itaconsäure, Fumarsäure oder Mischungen davon. Beispiele für das Derivat der ungesättigten Carbonsäure sind Ester bzw. Säureanhydride der vorstehend genannten Säuren, wobei insbesondere Acrylsäureester, Methacrylsäureester, Maleinsäuremonoester, Maleinsäurediester, Maleinsäureanhydrid, Itaconsäuremonoester, Itaconsäurediester, Itaconsäureanhydrid, Fumarsäuremonoester, Fumarsäurediester und Mischungen davon geeignet sind. Besonders bevorzugt wird Maleinsäureanhydrid eingesetzt.

Somit handelt es sich bei der Komponente D bevorzugt um mit einer carboxylgruppenhaltigen Verbindung, insbesondere Maleinsäureanhydrid, gepfropftes Polyethylen, insbesondere LLDPE (MA_g_LLDPE), oder mit carboxylgruppenhaltigen Verbindungen, insbesondere Maleinsäureanhydrid, gepfropftes C₂-C₄-α-Olefin-Vinylacetat-Copolymer mit einem Vinylacetat-Gehalt von > 40 Gew.-%, bevorzugt Ethylen-Vinylacetat-Copolymer mit einem Vinylacetat-Gehalt von > 40 Gew.-% (MA_g_EVM).

Geeignete Herstellungsverfahren für die Komponente D sind dem Fachmann bekannt. Die Modifikation (Pfropfung) des Polyolefinhomo- oder -copolymers kann z. B. durch Erwärmen und Kneten des Polyolefinhomo- oder -copolymers mit einer ungesättigten Carbonsäure oder einem Derivat davon in Gegenwart eines organischen Peroxids durchgeführt werden. Der Grad der Modifikation (Pfropfung) mit der ungesättigten Carbonsäure oder dem Derivat davon beträgt im Allgemeinen 0,5 bis 15 Gew.-%, bezogen auf das Gesamtgewicht der Komponente D.

Beispielsweise ist als Komponente D ein mit Maleinsäureanhydrid gepfropftes LLDPE geeignet, das z. B. unter dem Handelsnamen Fusabond^{®}EMB-226DY von Dupont erhältlich ist oder mit Maleinsäureanhydrid modifiziertes Ethylen-Vinylacetat-Copolymer mit einem Vinylacetat-Gehalt von 45 ± 1,5 Gew.-%, das z. B. unter dem Handelsnamen Levamelt^{®}MA450VP von Lanxess Deutschland GmbH kommerziell erhältlich ist.

### Komponente E

Als Komponente E wird in den erfindungsgemäßen Zusammensetzungen mindestens ein Flammschutzmittel eingesetzt. Dabei handelt es sich - da die Zusammensetzungen gemäß der vorliegenden Erfindung halogenfrei sind - bevorzugt um ein halogenfreies Flammschutzmittel. Bevorzugt ist das halogenfreie Flammschutzmittel mindestens ein anorganisches Flammschutzmittel. Geeignete anorganische Flammschutzmittel sind dem Fachmann bekannt. Bevorzugte anorganische Flammschutzmittel sind Aluminiumhydroxid (auch Aluminiumtrioxidhydrat genannt (ATH)), Magnesiumhydroxid (MDH), Magnesiumcarbonat und/oder Natriumaluminiumhydroxycarbonat und Hydrotalcit.

Besonders bevorzugt werden in den erfindungsgemäßen Zusammensetzungen als Komponente E Aluminiumhydroxid (ATH), Magnesiumhydroxid (MDH) und/oder Magnesiumcarbonat, ganz besonders bevorzugt Aluminiumhydroxid (ATH) und/oder Magnesiumhydroxid (MDH) eingesetzt. Geeignete Flammschutzmittel sind dem Fachmann bekannt und üblicherweise kommerziell erhältlich. Die vorstehend genannten bevorzugt eingesetzten Flammschutzmittel Aluminiumhydroxid und Magnesiumhydroxid können in unbehandelter Form, wie sie im Allgemeinen kommerziell erhältlich sind, eingesetzt werden oder einer Oberflächenbehandlung unterzogen werden. Beispiele für eine Oberflächenbehandlung umfassen eine Behandlung mit einer Fettsäure, eine Behandlung mit Phosphorsäure, eine Behandlung mit Titanat oder eine Behandlung mit einem Silan-Kopplungsmittel, z. B. einem Silan, das eine endständige Vinylgruppe, eine Methacryloxy-Gruppe, eine Glycidyl-Gruppe oder eine Aminogruppe aufweist. Die Oberflächenbehandlung des Aluminiumhydroxids oder Magnesiumhydroxids kann dabei z. B. durch Mischen des Aluminiumhydroxids oder Magnesiumhydroxids mit dem entsprechenden Behandlungsmittel gemäß dem Fachmann bekannten Verfahren durchgeführt werden. Mit Silan-Kopplungsmittel behandelte Magnesiumhydroxide sind z. B. unter den Handelsnamen Kisuma 5L, Kisuma 5N und Kisuma 5P von Kyowa Chemical Industry Co., Ltd., bzw. Finemag MO-E von TMG Corporation und Magnefin H5A von Albemarle kommerziell erhältlich.

Geeignetes (unbehandeltes) Aluminiumhydroxid (ATH) ist z. B. Aluminiumhydroxid, das unter dem Handelsnamen Apyral^{®}40CD von Nabaltec erhältlich ist. Geeignetes Magnesiumcarbonat ist z.B. unter dem Handelsnamen Magfy^{®} von Nuovasima erhältlich.

Die spezifische Oberfläche (BET-Oberfläche) des Füllstoffs beträgt im Allgemeinen < 30 m²/g, bevorzugt 1 bis 15 m²/g. Die spezifische Oberfläche von Aluminiumhydroxid (ATH) beträgt besonders bevorzugt 3 bis 8 m²/g und die spezifische Oberfläche von Magnesiumhydroxid (MDH) beträgt besonders bevorzugt 4 bis 8 m²/g.

### Komponente F

Als Komponente F können die erfindungsgemäßen Zusammensetzungen gegebenenfalls ein oder mehrere weitere Hilfs- und/oder Zusatzstoffe enthalten. Geeignete Hilfs- und Zusatzstoffe sind dem Fachmann grundsätzlich bekannt.

Beispiele für geeignete Hilfs- und Zusatzstoffe sind z. B. Stoffe, die die Flammhemmung der erfindungsgemäßen Zusammensetzungen weiter verbessern können, z. B. Melamincyanurat-Verbindungen, die z. B. unter den Handelsnamen MCA-0 und MCA-1 von Mitsubishi Chemical, Corp. oder unter den Handelsnamen MC640 und MC610 von Nissan Chemical Industries, Ltd., erhältlich sind, Zinkstannat, Zinkhydrostannat oder Zinkborat, wobei Zinkborat z. B. unter den Handelsnamen Alcanex FRC-500 (2ZnO/3B₂O₃3,5H₂O) und FRC-600 von Mizusawa Industrial Chemicals, Ltd., und Zinkstannat (ZnSnO₃) und Zinkhydrostannat (ZnSn(OH)₆) z. B. unter den Handelsnamen Alcanex ZS und Alcanex ZHS von Mizusawa Industrial Chemicals, Ltd., erhältlich sind.

Des Weiteren können die erfindungsgemäßen Zusammensetzungen z. B. Antioxidantien, Metall-Deaktivatoren, flammhemmende Hilfsstoffe, Füllstoffe sowie Gleitmittel enthalten.

Geeignete Antioxidantien sind z. B. Antioxidantien der Aminreihe wie 4,4'-Dioctyl-diphenylamin, N,N'-Diphenyl-p-phenylendiamin, 2,2,4-Trimethyl-1,2-dihydrochinolin-polymer; Antioxidantien der Phenolreihe wie Pentaerythrityl-tetrakis(3-(3,5-di-t-butyl-4-hydroxyphenyl)propionat), Octadecyl-3-(3,5-di-t-butyl-4-hydroxyphenyl)propionat, 1,3,5-Trimethyl-2,4,6-tris(3,5-di-t-butyl-4-hydroxybenzyl)benzol; Antioxidantien der Schwefel-Reihe wie Bis(2-methyl-4-(3-n-alkylthiopropionyloxy)-5-t-butylphenyl)sulfit, 2-Mercaptobenzimidazol und Zinksalze davon sowie Pentaerythrityl-tetrakis(3-dodecyl-thiopropionat).

Beispiele für geeignete Metall-Deaktivatoren sind N,N'-bis(3-(3,5-di-t-butyl-4-hydroxyphenyl)propionyl)hydrazin, 3-(N-Salicyloyl)amino-1,2,4-triazol, 2,2'-Oxamid-bis-(ethyl-3-(3,5-di-t-butyl-4-hydroxyphenyl)propionat).

Beispiele für flammhemmende Hilfsstoffe sowie Füllstoffe sind Ruß, Ton, Zinkoxid, Zinnoxid, Titanoxid, Magnesiumoxid, Molybdänoxid, Antimon(III)oxid, Silizium-Verbindungen, Quarz, Talkum, Calciumcarbonat, Magnesiumcarbonat und "weißer" Kohlenstoff (white carbon). In einer bevorzugten Ausführungsform enthalten die erfindungsgemäßen Zusammensetzungen zusätzlich zu den Komponenten A bis E Calciumcarbonat als Komponente F. Als Calciumcarbonat kann in den erfindungsgemäßen Zusammensetzungen z. B. feinteiliges Calciumcarbonat eingesetzt werden, das z. B. unter dem Handelsnamen Mikrosöhl^{®} von VK Damman KG erhältlich ist.

Beispiele für geeignete Gleitmittel sind Gleitmittel der Kohlenwasserstoff-Reihe, der Fettsäure-Reihe, der Fettsäureamid-Reihe, der Ester-Reihe, der Alkohol-Reihe sowie der Metallseifen-Reihe, wobei Gleitmittel der Ester-Reihe, der Alkohol-Reihe und der Metallseifen-Reihe bevorzugt sind. Des Weiteren sind Zinkstearat, Stearinsäure sowie Magnesiumstearat und Fettsäureamide als Gleitmittel geeignet.

Zusätzlich können die erfindungsgemäßen Zusammensetzungen als weitere Zusatzstoffe Polysiloxane, insbesondere Polydimethylsiloxan, enthalten. Beispielsweise sind geeignete Polydimethylsiloxane unter dem Handelsnamen Genioplast^{®}SP von Wacker erhältlich. Dabei handelt es sich um einen Polydimethylsiloxan PDMS Masterbatch. In einer weiteren bevorzugten Ausführungsform enthalten die erfindungsgemäßen Zusammensetzungen zusätzlich zu den Komponenten A bis E mindestens ein Polysiloxan, insbesondere Polydimethylsiloxan, als Komponente F. Es ist des Weiteren bevorzugt, dass die erfindungsgemäßen Zusammensetzungen neben den Komponenten A bis E sowohl Calciumcarbonat als auch mindestens ein Polysiloxan, insbesondere Polydimethylsiloxan, als Komponente F enthalten.

In einer bevorzugten Ausführungsform betrifft die vorliegende Erfindung somit eine Zusammensetzung, die die folgenden Komponenten enthält:
a) mindestens ein C₂-C₄-α-Olefin-Vinylacetat-Copolymer mit einem Vinylacetat-Gehalt von ≤ 0 Gew.-% oder eine Mischung enthaltend mindestens ein C₂-C₄-α-Olefin-Vinylacetat-Copolymer mit einem Vinylacetat-Gehalt von ≤ 40 Gew.-% und Polyethylen, bevorzugt ein Ethylen-Vinylacetat-Copolymer mit einem Vinylacetat-Gehalt von ≤ 40 Gew.-%, bevorzugt 15 bis ≤ 40 Gew.-%, besonders bevorzugt 20 bis 35 Gew.-%, ganz besonders bevorzugt 20 bis 30 Gew.-% oder eine Mischung aus einem Ethylen-Vinylacetat-Copolymer mit einem Vinylacetat-Gehalt von ≤ 40 Gew.-%, bevorzugt 15 bis ≤ 40 Gew.-%, besonders bevorzugt 20 bis 35 Gew.-%, ganz besonders bevorzugt 20 bis 30 Gew.-% und LLDPE, als Komponente A;
b) mindestens ein Ethylen-Vinylacetat-Copolymer mit einem Vinylacetat-Gehalt von 45 bis 98 Gew.-%, bevorzugt entweder (i) 40 bis 60 Gew.-%, bevorzugt 40 bis 50 Gew.-% oder (ii) 50 bis 90 Gew.-%, besonders 70 bis 85 Gew.-% als Komponente B;
c) mindestens ein durch Metallocen-Katalyse hergestelltes Ethylen-1-Octen-Copolymer, als Komponente C;
d) mit Maleinsäureanhydrid gepfropftes LLDPE oder mit Maleinsäureanhydrid gepfropftes Ethylen-Vinylacetat-Copolymer, bevorzugt mit einem Vinylacetat-Gehalt von > 40 Gew.-%, als Komponente D;
e) Aluminiumhydroxid (ATH), Magnesiumhydroxid (MDH), Magnesiumcarbonat und/oder Natriumaluminiumhydroxycarbonat und Hydrotalcit, bevorzugt Aluminiumhydroxid (ATH), Magnesiumhydroxid (MDH) und/oder Magnesiumcarbonat, besonders bevorzugt Aluminiumhydroxid (ATH) und/oder Magnesiumhydroxid (MDH), als Komponente E; und
f) gegebenenfalls mindestens einen Hilfs- und/oder Zusatzstoff ausgewählt aus weiteren Flammschutzmitteln, Antioxidantien, Metall-Deaktivatoren, flammhemmenden Hilfsstoffen, Füllstoffen, Gleitmitteln und Polysiloxanen, bevorzugt Calciumcarbonat und/oder mindestens ein Polysiloxan, insbesondere Polydimethylsiloxan, als Komponente F.

Die Komponente A ist in den erfindungsgemäßen Zusammensetzungen bevorzugt in einer Menge von 10 bis 30 Gew.-%, besonders bevorzugt 15 bis 25 Gew.-%, ganz besonders bevorzugt 18 bis 24 Gew.-%, bezogen auf die Gesamtmenge der Komponenten A bis E und gegebenenfalls F enthalten.

Die Komponente B ist in den erfindungsgemäßen Zusammensetzungen bevorzugt in einer Menge von 3 bis 15 Gew.-%, bevorzugt 5 bis 13 Gew.-%, besonders bevorzugt 7 bis 12 Gew.-%, bezogen auf die Gesamtmenge der Komponenten A bis E und gegebenenfalls F enthalten.

Die Komponente C ist in den erfindungsgemäßen Zusammensetzungen bevorzugt in einer Menge von 1 bis 10 Gew.-%, bevorzugt 2 bis 8 Gew.-%, besonders bevorzugt 3 bis 5 Gew.-%, bezogen auf die Gesamtmenge der Komponenten A bis E und gegebenenfalls F enthalten.

Die Komponente D ist in den erfindungsgemäßen Zusammensetzungen bevorzugt in einer Menge von 1 bis 10 Gew.-%, besonders bevorzugt 2 bis 8 Gew.-%, ganz besonders bevorzugt 3 bis 5 Gew.-%, bezogen auf die Gesamtmenge der Komponenten A bis E und gegebenenfalls F enthalten.

Die Komponente E ist in den erfindungsgemäßen Zusammensetzungen bevorzugt in einer Menge von 40 bis 75 Gew.-%, besonders bevorzugt 40 bis 70 Gew.-%, ganz besonders bevorzugt 50 bis 65 Gew.-%, bezogen auf die Gesamtmenge der Komponenten A bis E und gegebenenfalls F enthalten.

Die Komponente F ist in den erfindungsgemäßen Zusammenetzungen bevorzugt in einer Menge von 0 bis 25 Gew.-%, besonders bevorzugt 0,1 bis 20 Gew.-%, ganz besonders bevorzugt 0,5 bis 15 Gew.-%, bezogen auf die Gesamtmenge der Komponenten A bis F enthalten.

In einer besonders bevorzugten Ausführungsform betrifft die vorliegende Erfindung somit die vorstehend genannten erfindungsgemäßen Zusammensetzungen enthaltend
a) 10 bis 30 Gew.-%, bevorzugt 15 bis 25 Gew.-%, besonders bevorzugt 18 bis 24 Gew.-% der Komponente A;
b) 3 bis 15 Gew.-%, bevorzugt 5 bis 13 Gew.-%, besonders bevorzugt 7 bis 12 Gew.-% der Komponente B;
c) 1 bis 10 Gew.-%, bevorzugt 2 bis 8 Gew.-%, besonders bevorzugt 3 bis 5 Gew.-% der Komponente C;
d) 1 bis 10 Gew.-%, bevorzugt 2 bis 8 Gew.-%, besonders bevorzugt 3 bis 5 Gew.-% der Komponente D;
e) 40 bis 75 Gew.-%, bevorzugt 45 bis 70 Gew.-%, besonders bevorzugt 50 bis 65 Gew.-% der Komponente E; und
f) 0 bis 25 Gew.-%, bevorzugt 0,1 bis 20 Gew.-%, besonders bevorzugt 0,5 bis 15 Gew.-% der Komponente F;
wobei die Gesamtsumme der Komponenten A bis E und gegebenenfalls F 100 Gew.-% beträgt.

Die erfindungsgemäßen Zusammensetzungen können gemäß dem Fachmann bekannten Verfahren durch Mischung der Komponenten A bis E und gegebenenfalls F hergestellt werden. Die Mischung kann dabei z.B. durch Mischen der Komponenten A bis E und gegebenenfalls F bei Temperaturen von 25 bis 180 °C, bevorzugt 40 bis 160°C hergestellt werden. Dabei kann das Mischen in allen dem Fachmann bekannten und geeigneten Vorrichtungen, insbesondere in einem Extruder, bevorzugt einem Einschneckenextruder, durchgeführt werden. Beispiele für geeignete Einschneckenextruder sind z.B. Einschneckenextruder des Typs Copperion-Anlage oder Berstorf-Anlage.

Die erfindungsgemäßen Zusammensetzungen sind halogenfreie flammhemmende (HFFR), polymere Materialien, die zu Artikeln verarbeitet werden können, bei denen die Brandsicherheit von Belang ist. Bevorzugt werden die erfindungsgemäßen Zusammensetzungen zur Herstellung von Isolier- oder Mantelwerkstoffen für Kabel und Leitungen eingesetzt.

Ein weiterer Gegenstand der vorliegenden Erfindung ist daher die Verwendung der erfindungsgemäßen Zusammensetzungen als Isolier- oder Mantelwerkstoffe für Kabel oder Leitungen sowie Isolier- oder Mantelwerkstoffe für Kabel oder Leitungen enthaltend die erfindungsgemäßen Zusammensetzungen. Geeignete Leitungen sind üblicherweise aus einem Leiter (Draht) sowie einer elektrischen Isolierung aufgebaut. Gegebenenfalls können die Leiter zusätzlich zu der elektrischen Isolierung noch eine äußere Schicht als Schutzhülle aufweisen. Geeignete Kabel im Sinne der vorliegenden Erfindung sind eine Gruppe von Leitern, die mit einem Mantelwerkstoff (Hüllschicht) umhüllt sind.

Die erfindungsgemäße Zusammensetzung kann entweder als elektrische Isolierung oder als Mantelwerkstoff (Hüllschicht) in Form einer zweiten Schicht in einem Leiter oder in Form einer Hüllschicht in einem Kabel eingesetzt werden. Es ist ebenfalls möglich, die erfindungsgemäßen Zusammensetzungen in jeder dieser Schichten einzusetzen. Bevorzugt werden die erfindungsgemäßen Zusammensetzungen als Mantelwerkstoffe (Hüllschicht) eingesetzt.

Geeignete Materialien für in den erfindungsgemäßen Kabeln oder Leitungen eingesetzte Leiter (Drähte) sind im Allgemeinen Kupfer oder Aluminium oder in Sonderfällen auch Supraleiter, wobei Kupfer besonders bevorzugt ist.

Geeignete Materialien, die - in dem Fall, wenn keine erfindungsgemäße Zusammensetzung eingesetzt wird - als Isoliermaterialien bzw. Mantelmaterialien eingesetzte werden, sind dem Fachmann bekannt.

Ein weiterer Gegenstand der vorliegenden Erfindung sind Kabel oder Leitungen, die eine erfindungsgemäße Zusammensetzung enthalten. Die Kabel oder Leitungen können z. B. durch Extrusionsbeschichtung mit der erfindungsgemäßen Zusammensetzung um einen Leiter (Draht) oder um eine Gruppe von Leitern hergestellt werden.

Die Dicke der aus den erfindungsgemäßen Zusammensetzungen um einen Leiter (Draht) oder eine Gruppe von Leitern gebildeten Schichten ist im Allgemeinen nicht begrenzt. Bevorzugte Dicken sind z. B. 0,3 bis 3 mm.

Die nachfolgenden Beispiele erläutern die Erfindung zusätzlich.

### Beispiele

### 1. Eingesetzte Materialien

EVA Escorene^{®} UL 00328 von Exxon Mobil Chemical (VA-Gehalt: 27 Gew.-%, Schmelzflussindex (MFI) 3g/10 min, Dichte: 0,951 g/cm³)
EVM Levapren^{®} 450 HV, 800 HV von Lanxess Deutschland GmbH (VA-Gehalt: 45+/-1,5 Gew.-%, Schmelzflussindex (MFI) (190°C/2,16 kg): 2,5g/10 min, ML1+4/100°C: 20+/-4 MU, Dichte: 0,99 g/cm³; und VA-Gehalt: 80+/-1,5 Gew.-%, Schmelzflussindex (MFI) (190°C/2,16 kg): 4/10 min, ML1+4/100°C: 28+/-6MU, Dichte: 1,11 g/cm³)
Maleinsäure-modifiziertes LLDPE (MA_g_LLDPE) Fusabone^{®} E MB-226DY von DuPont (Schmelzflussindex (MFI) (190°C/2,16 kg): 1,5g/10 min, Dichte: 0,93 g/cm³
Feines gefälltes ATH Apyral^{®} 40CD von Nabaltec (BET-Oberfläche: 3,5 m2/g, D50: 1,3 µm, Dichte: 2,4 g/cm³)
Maleinsäure-modifiziertes EVM (MA_g_EVM) Levamelt^{®} MA 450 VP von Lanxess Deutschland GmbH (VA-Gehalt: 45+/-1,5 Gew.-%, Schmelzflussindex (MFI) (190°C/2,16 kg): 0,8g/10 min, Dichte: 1,05 g/cm³)
Stabilisator Irganox^{®} von Ciba
Polydimethylsiloxan PDMS Masterbatch Genioplast^{®} S P von Wacker
Feines Calciumcarbonat (CaCO₃) Mikrosöhl^{®} Calcium Carbonate von VK Damman KG (Dichte: 2,7 g/cm³)
EOC Ethylen-Octen Plastomer Exact® 0210 von DSM/Exxon Mobil Chemical Joint Venture (Schmelzflussindex (MFI): 10g/10 min, Dichte: 0,902 g/cm³)

### 2. Zusammensetzungen

Die in den Tabellen 1 und 2 genannten Zusammensetzungen werden hergestellt und bezüglich ihrer Eigenschaften untersucht.

**Tabelle 1**

| | | | | |
|---|---|---|---|---|
| EVA-Formulierungen basierend auf Zusammensetzungen unter Verwendung verschiedener EVM- Kautschuke und MA_g_LLDPE | | | | |

| Komponenten | **CA** | **C1** | **C2** | **C4** |
|---|---|---|---|---|
| EVM (VA=45 Gew.-%) | | 9,37 | | |
| EVM (VA=80 Gew.-%) | | | 9,37 | 8,42 |
| EVA (VA=27 Gew.-%) | 29,96 | 20,59 | 20,59 | 18,53 |
| EOC | 3,75 | 3,75 | 3,75 | 3,37 |
| MA-g-LLDPE | 3,75 | 3,75 | 3,75 | 3,75 |
| ATH (BET 3,5 m²/g) | 61,80 | 61,80 | 61,80 | 55,55 |
| PDMS Masterbatch | 0,37 | 0,37 | 0,37 | 0,33 |
| Stabilisator | 0,37 | 0,37 | 0,37 | 0,33 |
| Calcium Carbonat (CaCO₃) | | | | 10,10 |
| Gesamt [Gew.-%] | **100,00** | **100,00** | **100,00** | **100,00** |
| Dichte [g/cm³] | **1,513** | **1,522** | **1,546** | **1,616** |

Die Zusammensetzung CA ist ein Vergleichsbeispiel, das keine Komponente B enthält. Die Zusammensetzungen C1, C2 und C4 sind erfindungsgemäß.

**Tabelle 2**

| EVA-Formulierungen basierend auf Zusammensetzungen unter Verwendung verschiedener EVM- Kautschuke und MA_g_EVM | |
|---|---|
| Komponenten | **C5** |
| EVM (VA=45 Gew.-%) | 9,37 |
| EVA (VA=27 Gew.-%) | 20,59 |
| EOC | 3,75 |
| MA-g-EVM (VA= 45 | |
| Gew.-%) | 3,75 |
| ATH (BET 3,5 m²/g) | 61,80 |
| PDMS Masterbatch | 0,37 |
| Stabilisator | 0,37 |
| Calcium Carbonat (CaCO₃) | |
| Gesamt [Gew.-%] | **100,00** |
| Dichte [g/cm³] | **1,522** |

Die Zusammensetzung 5 ist erfindungsgemäß.

### 3. Herstellung der Zusammensetzungen

Die einzelnen Komponenten werden in einem Innenmischer (GK 1,5E von Werner & Pfleiderer) compoundiert. Die Compoundierbedingungen sind in der nachfolgenden Tabelle angegeben.

**Tabelle 3**

| | |
|---|---|
| Temperatur | 60°C |
| Rotorgeschwindigkeit | 50 rpm |
| Addition des Polymers/der Polymere | 30s |
| Addition der Füllstoffe und Additive | 90s |
| Fegen | 60s |
| Mischen | 60s |
| Gesamtzeit | 240s |

Die Zusammensetzungen werden granuliert und anschließend für 3 Stunden bei 80°C vor der Verarbeitung im Extruder getrocknet. Nach Trocknung werden die Zusammensetzungen in einem Brabender Einschneckenextruder (25 L/D) extrudiert. Die Extrudierparameter sind nachfolgend angegeben.

**Schneckenkompression (Screw Compression): 2:1**

| | |
|---|---|
| Austrittsdüse: | 20*2*100 mm |
| Temperatur: | 130-140-145-150°C |

**Tabelle 4**

| **Schneckengeschwindigkeit** | **85 rpm** | **C1** | **C2** | **C4** | **C5** |
|---|---|---|---|---|---|
| Drehmoment | Nm | 30,9 | 33,2 | 36,2 | 27,1 |
| Schmelztemperatur T4 | °C | 160 | 160 | 161 | 160 |
| Druck D1 | bar | 239 | 265 | 285 | 234 |
| Druck D2 | bar | 87 | 97 | 104 | 88 |
| Druck D3 | bar | 43 | 48 | 53 | 44 |
| Ausstoß | g/min | 59 | 61,8 | 66,6 | 49,4 |
| Schmelzviskosität | Pas | 604 | 629 | 614 | 710 |

### 4. Prüfmethoden

Die in den Tabellen 1 und 2 genannten Zusammensetzungen werden gemäß den folgenden ASTM-Verfahren (bzw. DIN-Verfahren) geprüft:
- ASTM E 1354: Cone Calorimeter, 50 kW/m2
- ASTM E 662: NBO Rauchkammer (Entflammen und Nicht-Entflammen wie dargestellt)
- ASTM D2863: Limitin Oxygen Index (LOI)
- ASTM D 412 or DIN 53504 Tensile test (dumbell)
- ASTM D 2240 Hardness Shore A and D
- ASTM D 471 Heißluftalterung
- ASTM D 573 Quellung in IRM Öl 902
- DIN EN ISO 1133 Schmelzflussindex (MFI)
- ASTM D 1646 Mooney Viskosität

### 5. Ergebnisse

### 5.1 Scmelzjlussindex (MFI) von Zusammensetzungen, die unter Verwendung von MA_g_LLDPE hergestellt werden

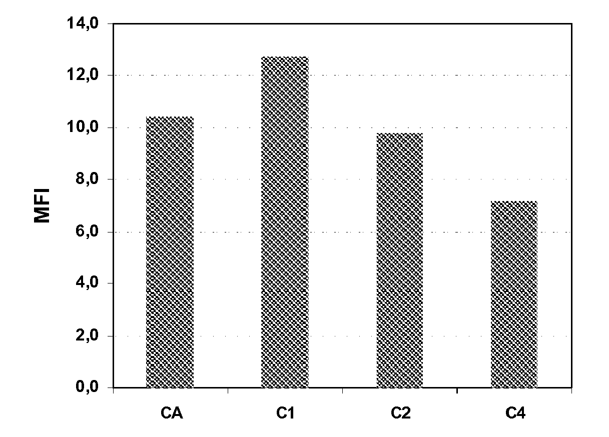

CA: Vergleich

### 5.2 Schmelzflussindex (MFI) der Zusammensetzung, die unter Verwendung von MA_g_EVM hergestellt wird

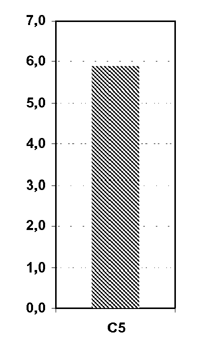

### 5.3 Zugfestigkeit (tensile strength) von Zusammensetzungen, die unter Verwendung von MA_g_LLDPE hergestellt werden

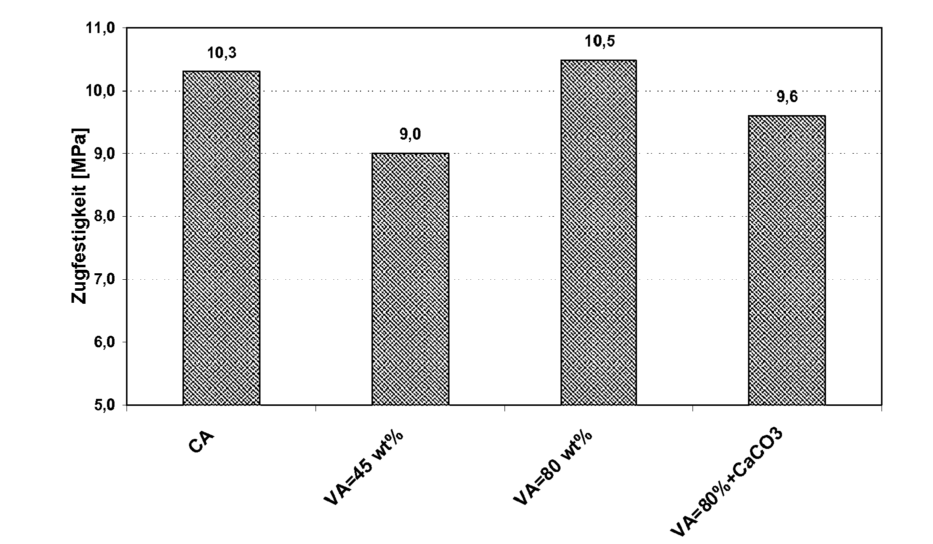

CA: Vergleich

### 5.4 Zugfestigkeit (tensile strength) der Zusammensetzung, die unter Verwendung von MA_g_EVM hergestellt wird

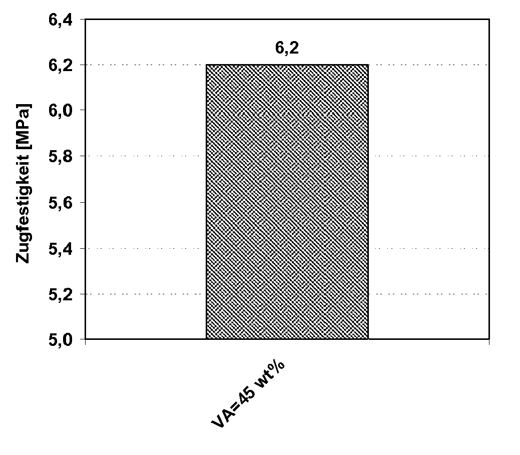

### 5.5 Bruchdehnung (elongation at break) von Zusammensetzungen, die unter Verwendung von MA_g_LLDPE hergestellt werden

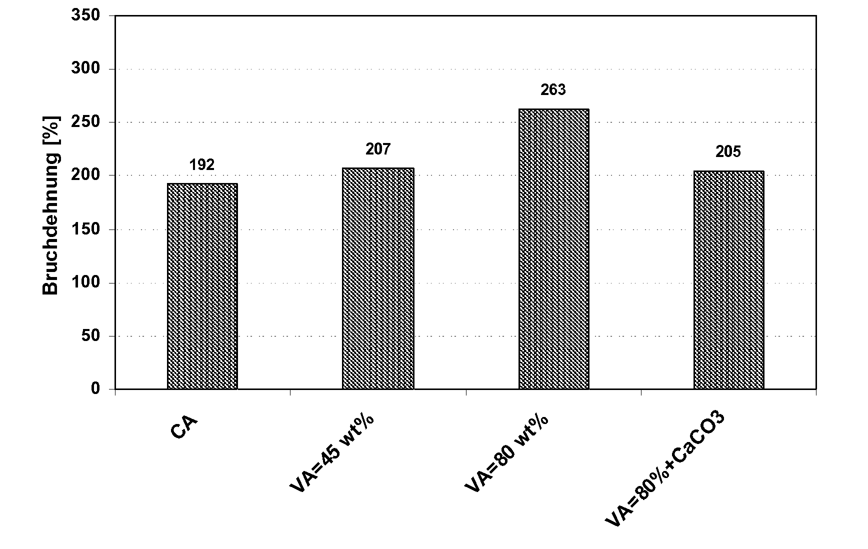

CA: Vergleich

### 5. 6 Bruchdehnung (elongation at break) der Zusammensetzung, die unter Verwendung von MA_g_EVM hergestellt wird

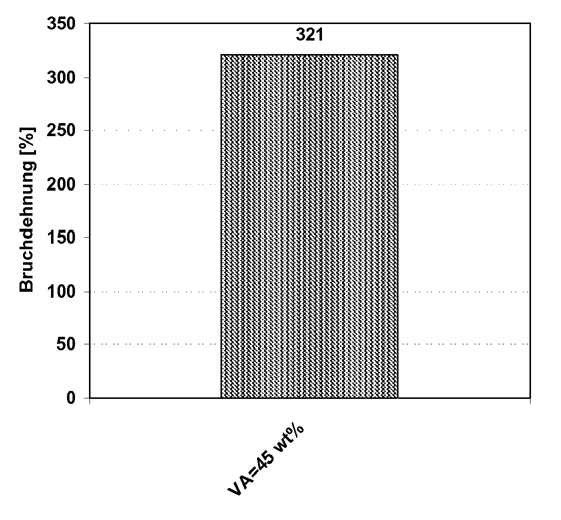

### 5.7 Härte von Zusammensetzungen, die unter Verwendung von MA_g_LLDPE hergestellt werden

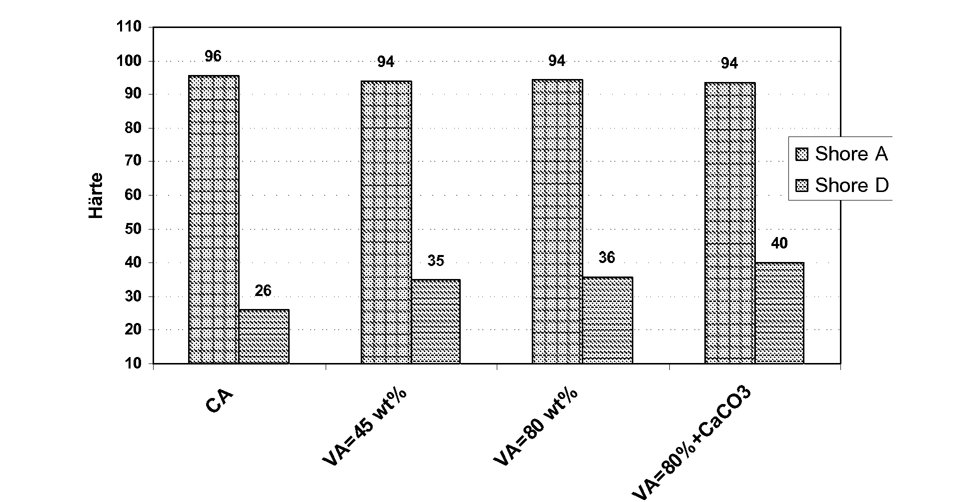

CA: Vergleich

### 5.8 Härte der Zusammensetzung, die unter Verwendung von MA_g_EVM hergestellt wird

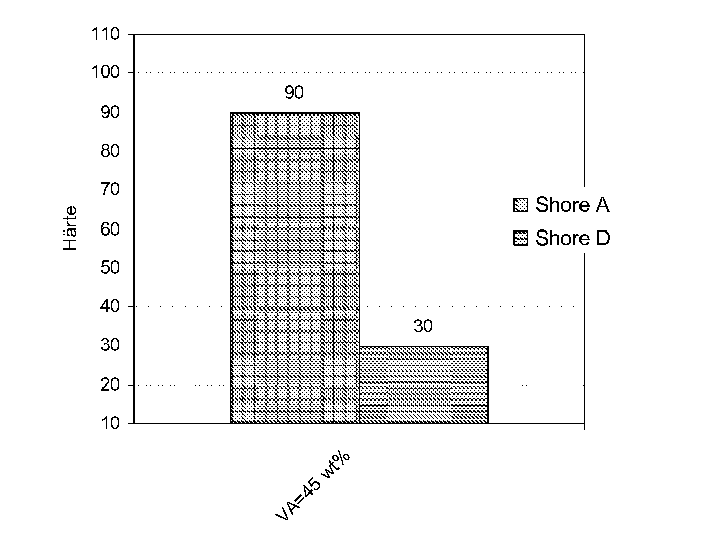

### 5.9 Verhalten bei Tauchen in Öl N° 902 4h, 70°C von Zusammensetzungen, die unter Verwendung von MA_g_LLDPE hergestellt werden

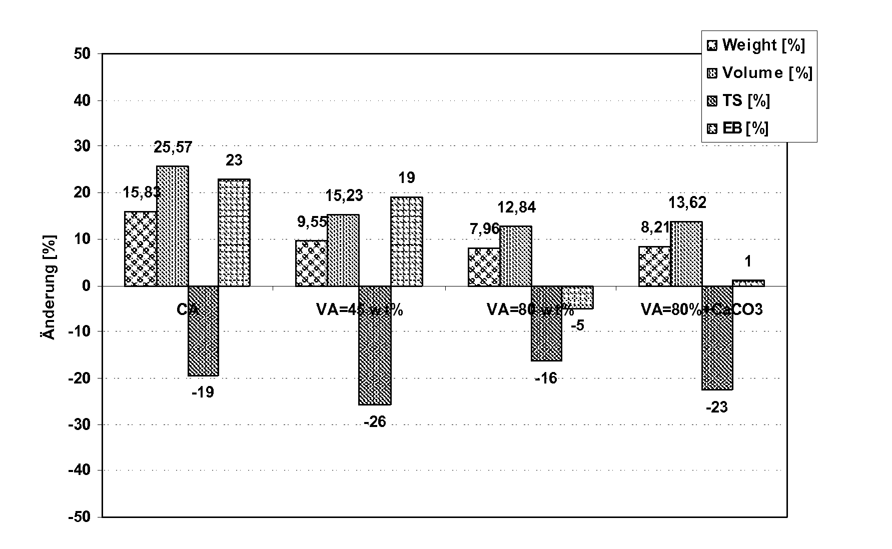

CA: Vergleich

Es bedeuten:
- Weight [%]: Gewichtsänderung in %
- Volume [%]: Volumenänderung in %
- TS [%]: Änderung der Zugfestigkeit (tensile strength) in %
- EB [%]: Änderung der Bruchdehnung (elongation at break) in %

### 5.10 Verhalten bei Tauchen in Öl N° 902 4h, 70°C der Zusammensetzung, die unter Verwendung von MA_g_EVM hergestellt wird

Es bedeuten:
- Weight [%]: Gewichtsänderung in %
- Volume [%]: Volumenänderung in %
- TS [%]: Änderung der Zugfestigkeit (tensile strength) in %
- EB [%]: Änderung der Bruchdehnung (elongation at break) in %

### 5.11 Sauerstoffindex (limiting oxygen index, LOI) von Zusammensetzungen, die unter Verwendung von MA_g_LLDPE hergestellt werden

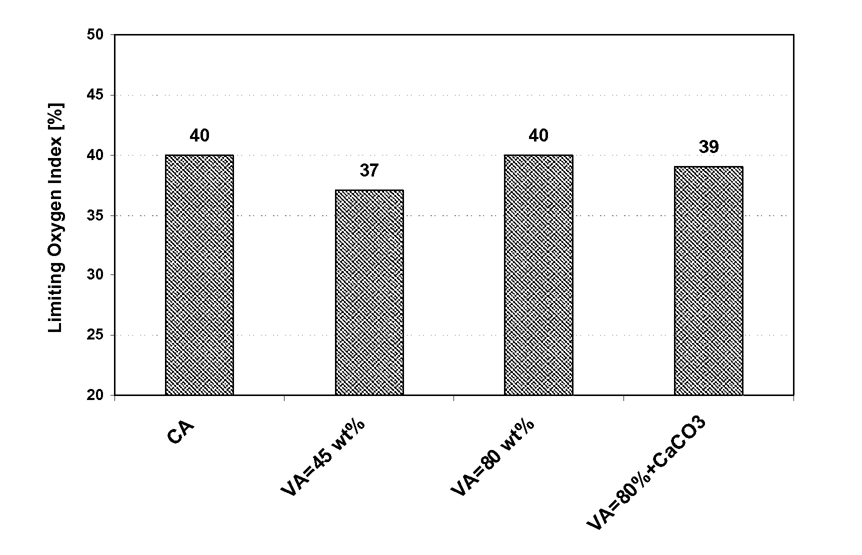

CA: Vergleich

### 5.12 Sauerstoffindex (limiting oxygen index, LOI) der Zusammensetzung, die unter Verwerdung von MA_g_EVM hergestellt wird

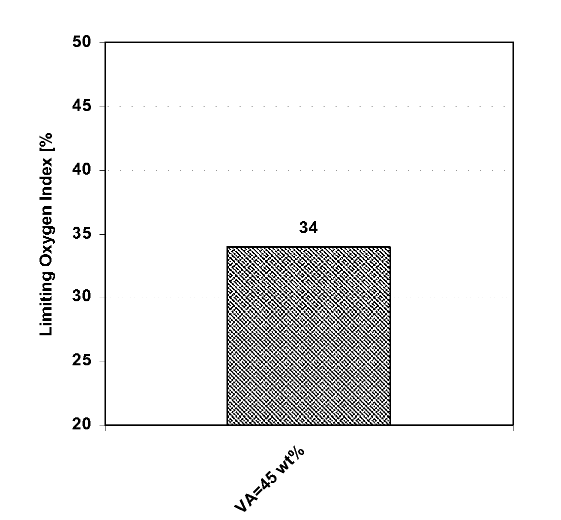

### 5.13 Bruchdehnung (elongation at break) bei -15C von Zusammensetzungen, die unter Verwendung von MA_g_LLDPE hergestellt werden

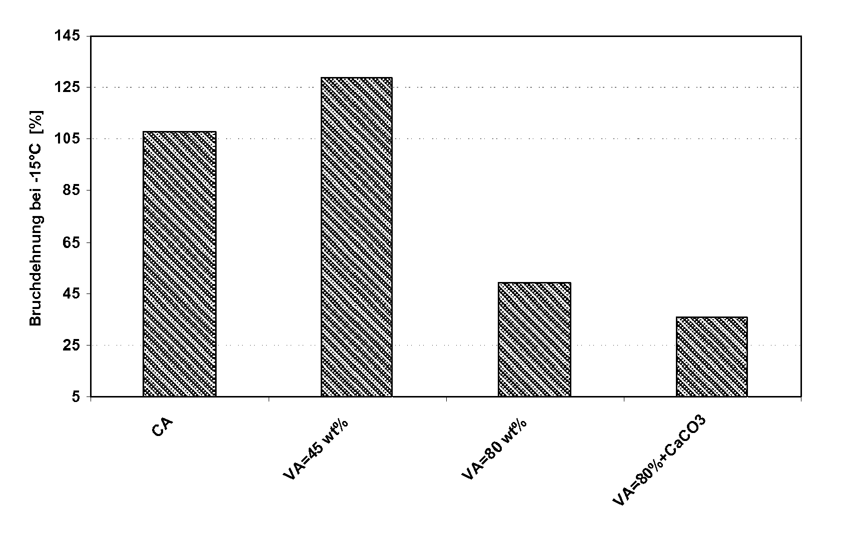

CA: Vergleich

### 5.14 Bruchdehnung (elongation at break) bei -15°C der Zusammensetzung, die unter Verwendung von MA_g_EVM hergestellt wird

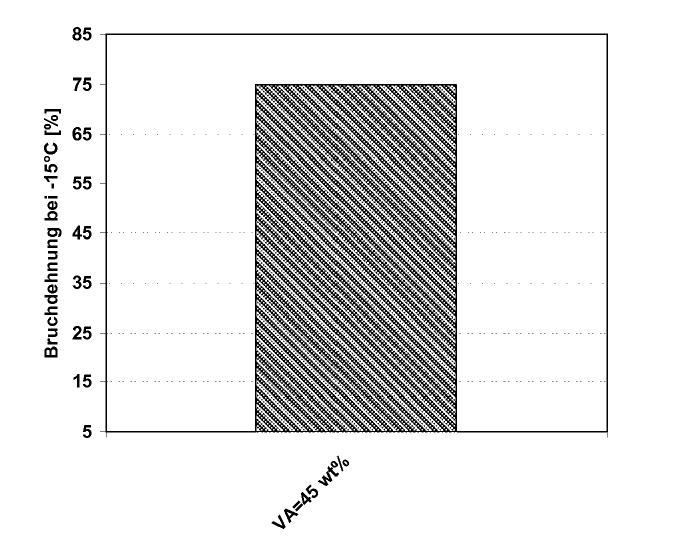

### 5.15 Heißluftalterung, 10 Tage bei 100°C von Zusammensetzungen, die unter Verwerdung von MA_g_LLDPE hergestellt werden

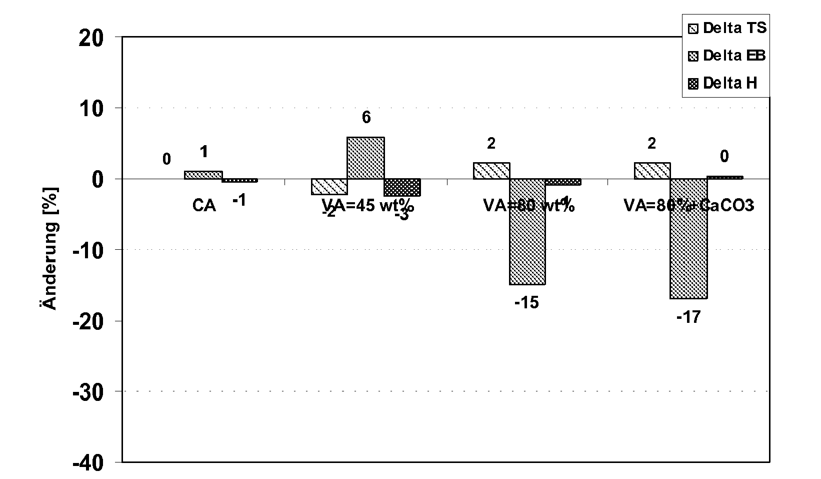

CA: Vergleich

Es bedeuten:
- Delta TS:: Änderung der Zugfestigkeit (tensile strength) in %
- Delta EB:: Änderung der Bruchdehnung (elongation at break) in %
- Delta H:: Enthalpieänderung in %

### 5.16 Heißluftalterung, 10 Tage bei 100°C der Zusammensetzung, die unter Verwendung von MA_g_EVM hergestellt wird

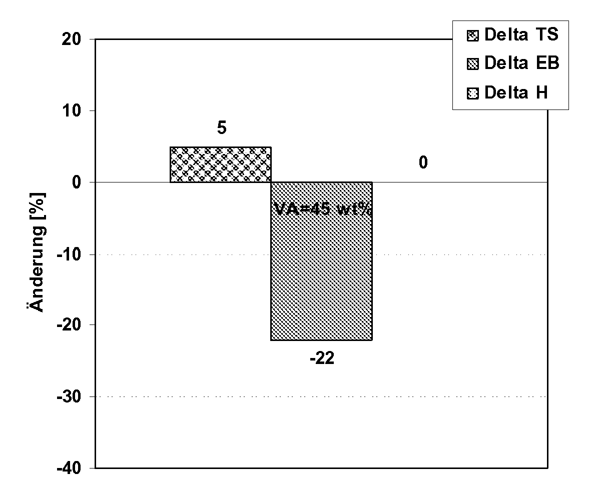

Es bedeuten:
- Delta TS:: Änderung der Zugfestigkeit (tensile strength) in %
- Delta EB:: Änderung der Bruchdehnung (elongation at break) in %
- Delta H:: Enthalpieänderung in %

### 5.17 Brandtests (cone calorimeter)

**Tabelle 5**

| Zusammensetzung | t(ig) [s] | HRR (peak) [kW/m²] | THR [MJ/m²] | HRR (180) [kW/m²] | HRR (300) [kW/m²] | MLR [g/s^{*}m²] | EHC [MJ/kg] | SPR [m²/s] | SEA [m²/kg] |
|---|---|---|---|---|---|---|---|---|---|
| C1 | 52 | 214,16 | 29,07 | 128,35 | 90,44 | 6,4 | 26,07 | 0,0060 | 236,93 |
| C2 | 46,3 | 215,38 | 23,42 | 107,97 | 73,64 | 4,6 | 21,62 | 0,0068 | 309,98 |
| C4 | 48,7 | 194,94 | 22,80 | 102,41 | 67,31 | 5,5 | 21,97 | 0,0048 | 211,78 |
| C5 | 50 | 269,71 | 23,23 | 108,24 | 72,39 | 5,4 | 21,65 | 0,0015 | 198,45 |

In Tabelle 5 sind die Cone Calorimeter Daten zusammengefasst. Die Daten umfassen:

| | |
|---|---|
| t(ig) in [s] | Zeit bis zur Entzündung (TTI) |
| HRR (peak) in [kW/m²] | maximale Wärmefreisetzungsrate (peak heat release rate, PHRR) |
| THR in [MJ/m²] | Gesamtwärmefreisetzungsrate (total heat release rate, THR) |
| HRR (180) in [kW/m²] | mittlere Wärmefreisetzungsrate nach 180s |
| HRR (300) in [kW/m²] | mittlere Wärmefreisetzungsrate nach 300s |
| MLR in [g/s*m²] | Masseverlustrate (mass loss rate, MLR) |
| EHC in [MJ/kg] | Wärmeenthalpie bei Verbrennung (enthalpie heat of combustion, EHC) |
| SPR in [m²/s] | Rauchbildungsrate (smoke production rate, SPR) |
| SEA in [m²/kg] | Rauchdichte (smoke density, SEA) |

### 5.18 Kaltbiegetest bei -15°C

Mischungen C1, C2, C4 und C5: bestanden

### 5.19 Zugfestigkeit (tensile strength) bei -15°C von Zusammensetzungen, die unter Verwerdung von MA_g_LLDPE hergestellt werden

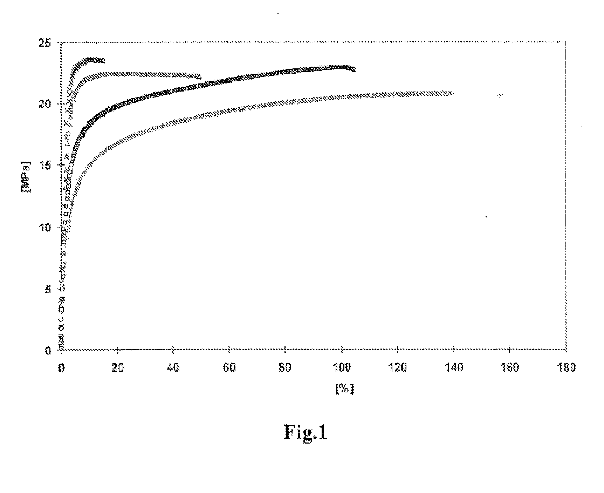

In der anliegenden **Fig. 1** sind Zugfestigkeitskurven bei -15°C der Zusammensetzungen CA, C1, C2 und C4 dargestellt.

In **Fig. 1** bedeuten:

| | |
|---|---|
| x-Achse | Dehnung in % |
| y-Achse | Zug (stress) in MPa |
| graue Kreuze | Zugfestigkeitskurve bei -15°C der Mischung C1 |
| schwarze Quadrate | Zugfestigkeitskurve bei -15°C der Mischung CA (Vergleich) |
| graue Dreiecke | Zugfestigkeitskurve bei -15°C der Mischung C2 |
| schwarze x | Zugfestigkeitskurve bei -15°C der Mischung C4 |

### 5.20 Zugfestigkeit (tensile strength) bei -15°C der Zusammensetzung, die unter Verwendung von MA_g_EVM hergestellt wird

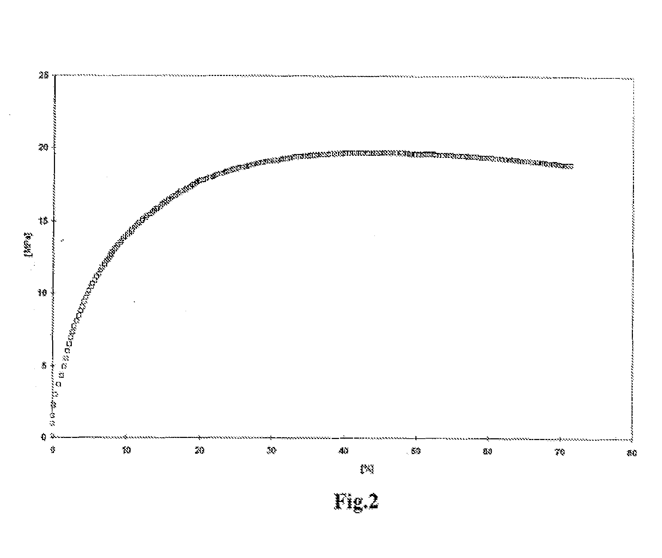

In der anliegenden **Fig. 2** ist die Zugfestigkeitskurve bei -15°C der Zusammensetzung C5 dargestellt.

In **Fig. 2** bedeuten:
- x-Achse: Dehnung in %
- y-Achse: Zug (stress) in MPa
- schwarze Quadrate: Zugfestigkeitskurve bei -15°C der Mischung C5

## Patentansprüche

1. Zusammensetzungen enthaltend
a) mindestens ein thermoplastisches Polymer als Komponente A;
b) mindestens ein C₂-C₄-α-Olefin-Vinylacetat-Copolymer mit einem Vinylacetat-Gehalt von > 40 Gew.-%, als Komponente B;
c) mindestens ein durch Metallocen-Katalyse hergestelltes Plastomer, basierend auf Ethylen und mindestens einem C₄-C₈-Olefin als Komponente C, wobei die Komponente C von der Komponente A verschieden ist;
d) mindestens ein Polyolefinhomo- oder -copolymer, das mit einer ungesättigten Carbonsäure oder einem Derivat davon modifiziert ist, als Komponente E;
e) mindestens ein Flammschutzmittel als Komponente E; und
f) gegebenenfalls einen oder mehrere weitere Hilfs- und/oder Zusatzstoffe als Komponente F.

2. Zusammensetzung nach Anspruch 1, **dadurch gekennzeichnet, dass** sie die folgenden Komponenten enthält:
a) mindestens ein C₂-C₄-α-Olefin-Vinylacetat-Copolymer mit einem Vinylacetat-Gehalt von ≤ 40 Gew.-% oder eine Mischung enthaltend mindestens ein C₂-C₄-α-Olefin-Vinylacetat-Copolymer mit einem Vinylacetat-Gehalt von ≤ 40 Gew.-% und Polyethylen, bevorzugt ein Ethylen-Vinylacetat-Copolymer mit einem Vinylacetat-Gehalt von ≤ 40 Gew.-%, bevorzugt 15 bis ≤ 40 Gew.-%, besonders bevorzugt 20 bis 35 Gew.-%, ganz besonders bevorzugt 20 bis 30 Gew.-% oder eine Mischung aus einem Ethylen-Vinylacetat-Copolymer mit einem Vinylacetat-Gehalt von ≤ 40 Gew.-%, bevorzugt 15 bis ≤ 40 Gew.-%, besonders bevorzugt 20 bis 35 Gew.-%, ganz besonders bevorzugt 20 bis 30 Gew.-% und LLDPE, als Komponente A;
b) mindestens ein Ethylen-Vinylacetat-Copolymer mit einem Vinylacetat-Gehalt von 45 bis 98 Gew.-%, bevorzugt entweder (i) mit einem Vinylacetat-Gehalt von 40 bis 60 Gew.-%, bevorzugt 40 bis 50 Gew.-% oder (ii) mit einem Vinylacetat-Gehalt von 50 bis 90 Gew.-%, besonders 70 bis 85 Gew.-%, als Komponente B;
c) mindestens ein durch Metallocen-Katalyse hergestelltes Ethylen-1-Octen-Copolymer, als Komponente C;
d) mit Maleinsäureanhydrid gepfropftes LLDPE oder mit Maleinsäureanhydrid gepfropftes Ethylen-Vinylacetat-Copolymerbevorzugt mit einem Vinylacetat-Gehalt von > 40 Gew.-%, als Komponente D;
e) Aluminiumhydroxid (ATH), Magnesiumhydroxid (MDH), Magnesiumcarbonat und/oder Natriumaluminiumhydroxycarbonat und Hydrotalcit, bevorzugt Aluminiumhydroxid (ATH), Magnesiumhydroxid (MDH) und/oder Magnesiumcarbonat, besonders bevorzugt Aluminiumhydroxid (ATH) und/oder Magnesiumhydroxid (MDH), als Komponente E; und
f) gegebenenfalls mindestens einen Hilfs- und/oder Zusatzstoff ausgewählt aus weiteren Flammschutzmitteln, Antioxidantien, Metall-Deaktivatoren, flammhemmenden Hilfsstoffen, Füllstoffen, Gleitmitteln und Polysiloxanen, bevorzugt Calciumcarbonat und/oder mindestens ein Polysiloxan, insbesondere Polydimethylsiloxan, als Komponente F.

3. Zusammensetzungen nach Anspruch 1 oder 2 enthaltend
a) 10 bis 30 Gew.-%, bevorzugt 15 bis 25 Gew.-%, besonders bevorzugt 18 bis 24 Gew.-% der Komponente A;
b) 3 bis 15 Gew.-%, bevorzugt 5 bis 13 Gew.-%, besonders bevorzugt 7 bis 12 Gew.-% der Komponente B;
c) 1 bis 10 Gew.-%, bevorzugt 2 bis 8 Gew.-%, besonders bevorzugt 3 bis 5 Gew.-% der Komponente C;
d) 1 bis 10 Gew.-%, bevorzugt 2 bis 8 Gew.-%, besonders bevorzugt 3 bis 5 Gew.-% der Komponente D;
e) 40 bis 75 Gew.-%, bevorzugt 45 bis 70 Gew.-%, besonders bevorzugt 50 bis 65 Gew.-% der Komponente E; und
f) 0 bis 25 Gew.-%, bevorzugt 0,1 bis 20 Gew.-%, besonders bevorzugt 0,5 bis 15 Gew.-% der Komponente F;
wobei die Gesamtsumme der Komponenten A bis E und gegebenenfalls F 100 Gew.-% beträgt.

4. Verfahren zur Herstellung der Zusammensetzungen nach einem der Ansprüche 1 bis 3, **dadurch gekennzeichnet, dass** die Komponenten A bis E und gegebenenfalls F miteinander gemischt werden.

5. Verwendung von Zusammensetzungen nach einem der Ansprüche 1 bis 3 als Isolier- oder Mantelwerkstoffe für Kabel oder Leitungen.

6. Isolier- oder Mantelwerkstoffe für Kabel oder Leitungen enthaltend eine Zusammensetzung nach einem der Ansprüche 1 bis 3.

7. Kabel oder Leitungen enthaltend eine Zusammensetzung nach einem der Ansprüche 1 bis 3.
